# EUROPEAN PATENT APPLICATION

(11) **EP 2 727 638 A2**
(43) Date of publication of application: **07.05.2014**
(21) Application number: 13188390.2
(22) Date of filing: 11.03.2010
(51) Int. Cl.: B01D 29/01, B01D 39/16, B01D 46/10, D04H 1/54, D04H 3/16, B01D 46/00, D04H 1/549, D04H 1/55, D04H 1/544

(54) **Filter and method of manufacture**

(30) Priority: 20.03.2009 GB 0904769
(62) Divisional of application: 10156238.7
(71) Applicant: Brentnall, Nicholas, Gloucestershire GL51 6QL (GB)
(72) Inventor: Brentnall, Nicholas, Gloucestershire GL51 6QL (GB)
(74) Representative: Stevenson-Hill, Jack Patrick

(57) **Abstract**

A filter comprises a pad of non-woven fibrous material, the pad having a substantially solid outer edge of consolidated pad material which has been softened and subsequently hardened, wherein the solid edge and the pad have comparable thickness traverse to a plane of the pad.

## Description

This invention relates to a filter of non-woven fibrous material and to a method of manufacturing such a filter.

It is common practice to manufacture filters of non-woven fibrous material by encasing peripheral regions of a filter pad in a frame formed around the filter pad by an injection moulding process, there being a seal between the periphery of the filter pad and the frame. The seal ensures that all of the fluid passes through the filter pad without by-passing the pad. The frame also provides support for the filter pad and improves handleability and durability thereof, for example allowing the filter to be compressed and washed.

The injection moulding process relies on axial compression of peripheral regions of the filter pad so as to eliminate any lofted non-woven material and to allow the injection moulding tool to seal with the filter pad around the periphery thereof. Compressing the filter pad makes it less permeable and affects its performance, considerably so with relatively thick filter pads (for example having a thickness greater than about 10 mm). On the other hand, if the filter pad is not compressed the injection moulding process will simply inject the plastics frame material throughout the entire filter pad rendering the pad useless. Such a compression technique is known, for example, from WO-A-2005079951.

It is therefore desirable to provide a filter and a method of manufacturing such a filter which inhibits absorption of frame material beyond the periphery of the filter pad without the need for compressing the peripheral region of the filter pad. It is even more desirable to provide a filter and a method of manufacturing such a filter which eliminates the need for a separate frame while maintaining sufficient durability and handleability of the filter.

It is therefore an object of the present invention to provide a filter of non-woven fibrous material and a method of manufacturing such a filter which overcomes or at least ameliorates the disadvantages of known filters.

According to one aspect of the present invention there is provided a filter comprising a pad of non-woven fibrous material, the pad having a substantially solid edge of consolidated pad material which has been softened and subsequently hardened.

According to another aspect of the present invention there is provided a method of manufacturing a filter comprising the steps of: providing a pad of non-woven fibrous material; treating a peripheral region of the pad so as to form around the pad an edge of consolidated material which has been softened; and subsequently allowing the edge of consolidated material to harden.

The pad may be treated by laterally compressing and heating a peripheral region of the pad so as to form around the pad an edge of consolidated material which has been softened.

The peripheral region of the pad may be heated substantially to the melting point of the fibrous material.

The peripheral region of the pad may be laterally compressed and heated by means of plates which are provided with recesses which together correspond substantially to the shape of the pad. The plates may be movable towards and away from each other to engage and disengage the peripheral region of the pad. The plates may incorporate heating means, such as at least one electric heating element.

The pad may be supported on a support plate, for example of thermally insulating material.

If desired, the edge of the pad may be enclosed within a sleeve of different material. For example, the edge of the pad may be enclosed within a sleeve of high-temperature resistant paper. The sleeve may be sacrificial.

Alternatively, the pad may be treated by rotation relative to a cylindrical component such that the peripheral edge of the pad is heat and softened or melted by friction between the peripheral edge of the pad and the cylindrical component. The heated pad can then be separated from the cylindrical component and allowed to cool and harden so as to form a solid edge.

In a further alternative, the filter pad may be cut from a sheet of non-woven fibrous material by means of a laser beam which softens and melts the material either side of the beam and causes the pad material to consolidate such that a solid edge is formed on the pad as the material cools and hardens.

In another alternative, the edge of the filter pad may be treated with a solvent which causes the material in the edge region to soften and to consolidate. After removal of the solvent the edge region subsequently hardens to cause a solid edge to be formed on the pad.

The filter pad may be compressed or other means, such as laser profiling, may be used to alter the edge profile of the filter pad during formation of the solid edge. For example, the edge may be caused to bulge by application of pressure or may be angled from one or both faces by laser profiling.

The non-woven fibrous material may be selected from a plastics material, such as polyester, polypropylene, nylon 6 or nylon 6/6.

For a better understanding of the present invention and to show more clearly how it may be carried into effect reference will now be made, by way of example, to the accompanying drawings in which:
Figure 1 is an exploded perspective view of one embodiment of an apparatus in a first configuration for effecting a method according to the present invention for producing a filter;
Figure 2 is a perspective view of the apparatus of Figure 1 in a second configuration; and
Figure 3 is a perspective view of one embodiment of a filter according to the present invention.

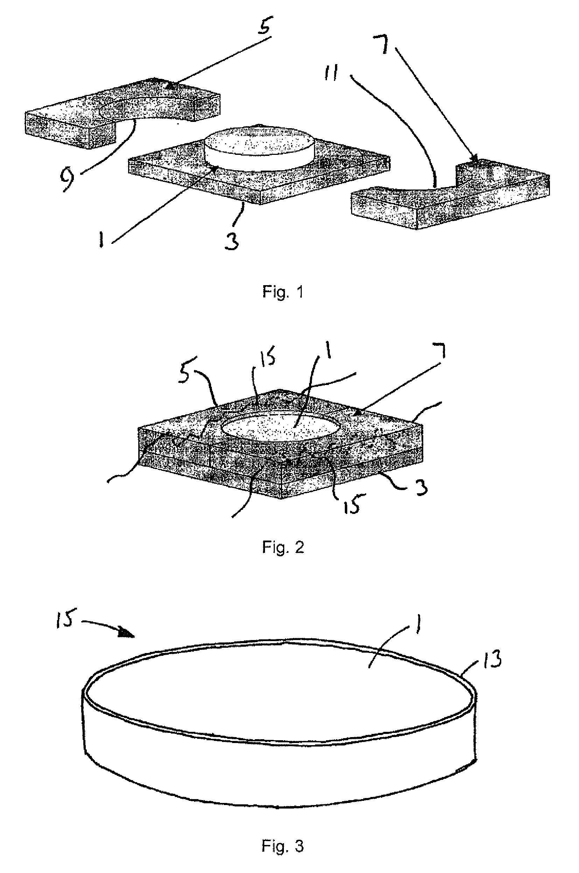

Figures 1 and 2 show an apparatus for producing a filter of non-woven fibrous material from a pad 1 of such material. The non-woven fibrous material may be, for example, a plastics material such as polyester, polypropylene, nylon 6 or nylon 6/6. The apparatus includes a support plate 3, for example of a thermally insulating material, for supporting the pad 1 and a pair of thermo-forming plates 5, 7 which are formed with recesses 9, 11. The plates 5, 7 are movable between a first, spaced configuration as shown in Figure 1 and a second, closed configuration as shown in Figure 2. The recesses 9, 11 are shaped and dimensioned such that they correspond to the shape of the periphery of the pad 1 and engage and compress the peripheral region of pad laterally to a small degree, while leaving the majority of the pad uncompressed. The thermo-forming plates 5, 7 each incorporate heating means, for example electric heating elements 15 (shown diagrammatically in Fig. 2), at least in the region of the recesses 9, 11 so as to heat the peripheral edge of the pad 1 substantially to the melting point of the material of the pad so as to soften and fuse the fibres to an extent sufficient to cause the fibres to consolidate and, when subsequently cooled and hardened, create a substantially solid edge 13 as shown in Figure 3 and to substantially prevent the passage of liquid in the event of subsequent injection moulding of a frame, or resin casting of a frame, because the casting tool can seal against the solidified edge of the filter pad. Consequently, there is no need to compress the pad during subsequent formation of a frame and the performance of the filter is improved over known filters.

In use of the apparatus of Figures 1 and 2, a filter pad 1 is placed on the support plate 3 in a predetermined location and the heated thermo-forming plates 5, 7 are moved together such that the recesses 9, 11 engage the periphery of the filter pad as shown in Figure 2 and compress the peripheral region of the pad to some degree. The thermo-forming plates also heat the peripheral region to a suitable temperature of substantially the melting point of the material of the filter pad so as to cause the material to soften. For polyester materials the melting temperature is generally about 265 degrees Celsius, for polypropylene materials the melting temperature is generally about 165 degrees Celsius, for nylon 6 the melting temperature is generally about 255 degrees Celsius, and for nylon 6/6 the melting temperature is about 255 degrees Celsius. Once the consolidated edge has been formed, the thermo-forming plates are withdrawn to a position such as that shown in Figure 1 and, once the solid edge has subsequently cooled and hardened sufficiently, the formed filter pad can be removed.

While the provision of a frame for the filter pad may be required for products that are intended as replacements for existing filters, it has been found that the solid edge 13 satisfies the requirements for durability and handleability and that a frame is no longer required, with the filter pad 1 and solid edge 13 forming a complete filter 15.

If desired, the edge of the filter pad 1 may be enclosed within a sleeve of different material to assist the forming and/or hardening process. For example, the edge of the filter pad may be enclosed within a sleeve of high-temperature resistant paper which facilitates heating, and therefore softening or melting, of the material of the filter pad, but which inhibits burning of the material. Such a sleeve may be sacrificial and may be used only once.

It has been found that the solid edge 13 can be formed in a number of different ways.

For example, heat can be generated by friction. That is, the filter pad 1 can be rotated relative to a cylindrical component such that the peripheral edge of the pad is heated and softened or melted by friction between the peripheral edge of the pad and the cylindrical component so as to cause the material of the pad to consolidate. The heated pad can then be separated from the cylindrical component and allowed to cool and harden so as to form a solid edge 13.

Alternatively, the filter pad 1 can be cut from a sheet of suitable non-woven fibrous material by means of a laser beam which softens and melts the material either side of the beam and causes the pad material to consolidate such that a solid edge 13 is formed on the pad as the material cools and hardens.

As a further alternative, the edge of the filter pad 1 may be treated with a solvent which causes the material in the edge region to soften or "melt" and to consolidate. When the solvent evaporates or is otherwise removed the edge region subsequently hardens to cause a solid edge 13 to be formed on the pad. Suitable solvents are well known to the skilled person, but by way of example include acetone for polyester, carbon tetrachloride for polypropylene and phenol for nylon.

The filter pad may be compressed or other means, such as laser profiling, may be used to alter the edge profile of the filter pad during formation of the solid edge 13. For example, the edge may be caused to bulge by application of pressure or may be angled from one or both faces by laser profiling.

The invention may include the following numbered aspects.
1. A filter comprising a pad (1) of non-woven fibrous material, the pad having a substantially solid edge (13) of consolidated pad material which has been softened and subsequently hardened.
2. A filter as described in aspect 1, wherein the non-woven fibrous material comprises a plastics material.
3. A filter as described in aspect 2, wherein the non-woven fibrous material is selected from polyester, polypropylene, nylon 6 and nylon 6/6.
4. A method of manufacturing a filter comprising the steps of: providing a pad (1) of non-woven fibrous material; treating a peripheral region of the pad so as to form around the pad an edge of consolidated material (13) which has been softened; and subsequently allowing the edge of consolidated material to harden.
5. A method according to aspect 4, wherein the pad (1) is treated by laterally compressing and heating a peripheral region of the pad so as to form around the pad an edge of consolidated material (13) which has been softened.
6. A method according to aspect 4 or 5, wherein the peripheral region of the pad is heated substantially to the melting point of the fibrous material.
7. A method according to aspect 4, 5 or 6, wherein the peripheral region of the pad is laterally compressed and heated by means of plates (5, 7) which are provided with recesses (9, 11) which together correspond substantially to the shape of the pad (1).
8. A method according to aspect 7, wherein the plates (5, 7) are movable towards and away from each other to engage and disengage the peripheral region of the pad (1).
9. A method according to aspect 7 or 8, wherein the plates (5, 7) incorporate heating means (15).
10. A method according to aspect 9, wherein the heating means comprises at least one electric heating element (15).
11. A method according to any one of aspects 4 to 10, wherein the pad (1) is supported on a support plate (3).
12. A method according to any one of aspects 4 to 11, wherein the edge of the pad (1) is enclosed within a sleeve of different material.
13. A method according to aspect 4, 5 or 6, wherein the pad (1) is treated by rotation relative to a cylindrical component such that the peripheral edge of the pad is heat and softened or melted by friction between the peripheral edge of the pad and the cylindrical component.
14. A method according to aspect 4, 5 or 6, wherein the filter pad (1) is cut from a sheet of non-woven fibrous material by means of a laser beam which softens and melts the material either side of the beam and causes the pad material to consolidate such that a solid edge is formed on the pad as the material cools and hardens.
15. A method according to aspect 4, 5 or 6, wherein the edge of the filter pad (1) is treated with a solvent which causes the material in the edge region to soften and to consolidate.

## Claims

1. A filter comprising a pad (1) of non-woven fibrous material, the pad having a substantially solid outer edge (13) of consolidated pad material which has been softened and subsequently hardened, wherein the solid edge and the pad have comparable thickness traverse to plane of the pad.

2. The filter as claimed in claim 1, further comprising a frame moulded to the solid edge.

3. The filter as claimed in claim 1 or claim 2, wherein the pad of non-woven fibrous material or the frame comprises plastics material.

4. The filter as claimed in any one of claims 1 to 3, wherein,
the thickness of the pad is the same as the thickness of the solid edge; and/or
the non-woven fibrous material is selected from polyester, polypropylene, nylon 6 and nylon 6/6.

5. The filter as claimed in any one of claims 2 to 4, wherein the frame is moulded onto the solid edge by way of injection moulding or resin casting and integrally formed with the pad.

6. The filter as claimed in any one of claims 1 to 5, comprising at least two said pads.

7. A method of manufacturing a filter comprising the steps of: providing a pad (1) of non-woven fibrous material having a plane; treating a peripheral region of the pad so as to form around the pad and across substantially whole thickness of the pad an outer edge of consolidated material (13) which has been softened; subsequently allowing the edge of consolidated material to harden, the thickness of the pad is traverse to plane of the pad.

8. The method as claimed in claim 7, further comprising the step of moulding a frame to the edge of consolidated material subsequent to hardening of the edge

9. The method as claimed in claim 7 or claim 8, wherein the pad (1) is treated by laterally compressing and heating a peripheral region of the pad so as to form around the pad an edge of consolidated material (13) which has been softened.

10. The method as claimed in in any one of claims 7 to 9, wherein;
the peripheral region of the pad is heated substantially to the melting point of the fibrous material; and/or
the peripheral region of the pad is laterally compressed and heated by means of plates (5, 7) which are provided with recesses (9, 11) which together correspond substantially to the shape of the pad (1).

11. The method as claimed in claim 10, wherein;
the plates (5, 7) are movable towards and away from each other to engage and disengage the peripheral region of the pad (1); and/or
the plates (5, 7) incorporate heating means (15), the heating means optionally comprising at least one electric heating element (15).

12. The method as claimed in any one of claims 7 to 11, further comprising the step of;
supporting the pad (1) on a support plate (3); and/or
enclosing the edge of the pad (1) within a sleeve of different material.

13. The method as claimed in any one of claims 7 to 10, wherein;
the pad (1) is treated by rotation relative to a cylindrical component such that the peripheral edge of the pad is heat and softened or melted by friction between the peripheral edge of the pad and the cylindrical component; or the filter pad (1) is cut from a sheet of non-woven fibrous material by means of a laser beam which softens and melts the material either side of the beam and causes the pad material to consolidate such that a solid edge is formed on the pad as the material cools and hardens; or
the edge of the filter pad (1) is treated with a solvent which causes the material in the edge region to soften and to consolidate.

14. The method as claimed in any one of claims 8 to 13, wherein;
the frame is moulded to the edge of consolidated material by injection moulding or resin casting; and/or
the frame comprises plastics material; and/or
the frame is integrally formed with the pad.

15. The method as claimed in any one of claims 7 to 14, wherein the thickness of the pad is the same as the thickness of the edge of consolidated material, both thicknesses are traverse to the plane of the pad.
